# EUROPEAN PATENT APPLICATION

(11) **EP 1 253 542 A2**
(43) Date of publication of application: **30.10.2002**
(21) Application number: 02252582.8
(22) Date of filing: 11.04.2002
(51) Int. Cl.: G06F 17/60

(54) **Delivery of location significant advertising**

(30) Priority: 27.04.2001 US 844349
(71) Applicant: Hewlett-Packard Company, Palo Alto, CA 94304 (US)
(72) Inventor: Jacob, Joseph, San Francisco, CA 94110 (US); Hammerstad, Diane R., Corvallis, OR 97330 (US)
(74) Representative: Jackson, Richard Eric

(57) **Abstract**

In order to fulfill the need for content-subsidizing advertisements to be different when a user's communication unit (103) is away from the user's home geographic location, a location attribute (409) is associated with advertisements (407). A current location is determined (413, 902) for the user's communication unit, compared (411) to the location attributes, and an advertisement having a location attribute matching the current location is delivered to the communication unit in along with user-desired content.

## Description

### BACKGROUND OF THE INVENTION:

The present invention generally relates to the method and apparatus that delivers desired content to a user and more particularly relates to delivery of advertisements included with content in an electronic publication that have a geographic location significance to a user.

Information is being made available to people at an increasing rate. It has become commonplace for news, calendars, images, and other diverse content topics to be published to individuals by way of the Internet or similar networks. This type of publication is distinguishable from conventional broadcasting in that broadcasting is a widespread dissemination of identical information to a large number of people while network publication can be and is a more individualized delivery of information. A good example of the individualized delivery of information is that embodied in the "Instant Delivery" service offered by Hewlett-Packard Company (and found at the Internet website www.instant-delivery.com). Network publication need not be bound by a wired interface, as one would expect for personal computers and Internet devices, but have expanded to PDAs (Personal Digital Assistants) and digital cellular telephones capable of wireless interconnection to the Internet.

Individualization of content tailored to the expressed preferences of a person has led to the individualization of advertising also tailored to the expressed preferences (and the inferred preferences) of the person. Catalog retailers have known of and exploited lists of persons whose shopping habits have been collated into a profile favorably disposed to the products being offered by the catalog retailer. A person on the list will receive an unsolicited catalog. Advertisers alert to the possibilities of the Internet use the same methods to target potential purchasers, but the collection and sorting of names and preferences can now be accomplished more quickly and accurately. It should be noted that much of this collection of preferences is not meant to be devious or with ill will, but done in a way that provides the individual possibilities of items and services that the individual would want rather than burdening the individual with advertisements that are for items and services that are totally unwanted. It is a fact that most publications cannot be accomplished unless they are subsidized by advertising placed along with the desired content. Thus, banner ads and margin ads are placed in most web pages offering otherwise free services and publications delivering content to users also have similar advertising.

A user of a moveable communications unit, such as a PDA or suitable equipped cellular telephone expects access to desired information, pictures, graphics, and similar material (generally referred to as content) as the user transports the communications unit from place to place. Users would like their content delivered without cost and without advertisements. Content and its delivery is not free, however, so unless it is provided as part of a paid-for transaction, user-desired content is subsidized by accompanying advertisements. It would be very desirable to the user, to a provider of web services, and to an advertiser that advertisements delivered to moveable communications units when they are away from their home area be different than when the communications units are at home.

### SUMMARY OF THE INVENTION:

A content delivery service delivers user selected content and content-subsidizing advertisements to a communications unit. An advertisement includes a location attribute assocaited with the advertisement. A communications unit location detector obtains a current location of the communications unit and a comparison is made between the advertisement location attribute and the current location of the communications unit. A delivery interface publishes the selection of content and a content-subsidizing advertisement based upon a location match by the comparator.

### BRIEF DESCRIPTION OF THE DRAWINGS:

FIG. 1 is a block diagram depicting a communications arrangement that provides information delivery and which may employ the present invention.

FIG. 2 is an illustration of a communications unit that may employ the present invention.

FIG. 3 is a representation of a map of a geographic area that may be utilized in deployment of the present invention.

FIG. 4 is a logic flow diagram of a publication assembly process that may be employed in the present invention.

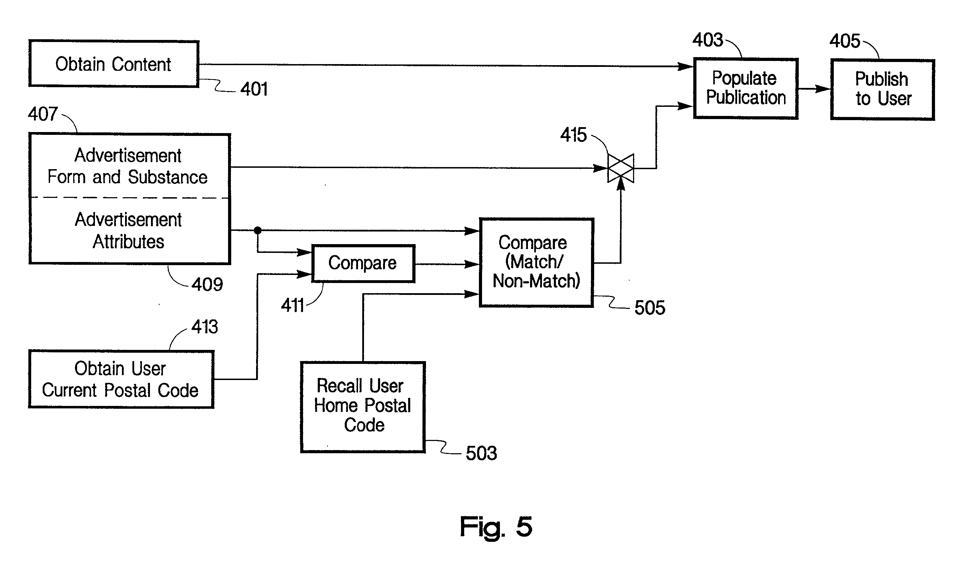

FIG. 5 is a logic flow diagram of an alternative publication assembly process that may be employed in the present invention.

FIG. 6 is a logic flow diagram of an alternative publication assembly process that may be employed in the present invention.

FIG. 7 is a logic flow diagram of an alternative publication assembly process that may be employed in the present invention.

FIG. 8 is a flowchart of a process of obtaining the desired advertising that may be employed in the present invention.

FIG. 9 is a flowchart of a communications unit content request and display process that may be employed in the present invention.

FIG. 10 is a flowchart of a location verification process that may be employed in the process of FIG. 9.

### DETAILED DESCRIPTION OF A PREFERRED EMBODIMENT:

The present invention encompasses the ability to determine a current geographic location for a communications unit and to tailor advertisements accompanying desired content delivery (or "publication") to the needs of users who are away from home. It is a feature of the present invention that the advertisements being published with the user-specified content are not specified, as such, by the user. Rather, the advertisement form and substance are determined by the advertiser and are directed to users at certain geographic locations. In some instances, the user can, in advance of any publications, specify general categories of advertisements that could be of interest or general categories of advertisements that should be blocked from inclusion with desired content.

An individual user wants to obtain content covering a selected category of subject matter. In order to better provide content-subsidized advertising useful to a user, the significance of the user's location relative to the pertinent location of the advertising is taken into account when the advertising is delivered to the user. In those embodiments employing a stored user profile, the advertising's relevance to a user's profile is also considered when it is combined with desired content that has been predefined by the user to a content delivery service provider.

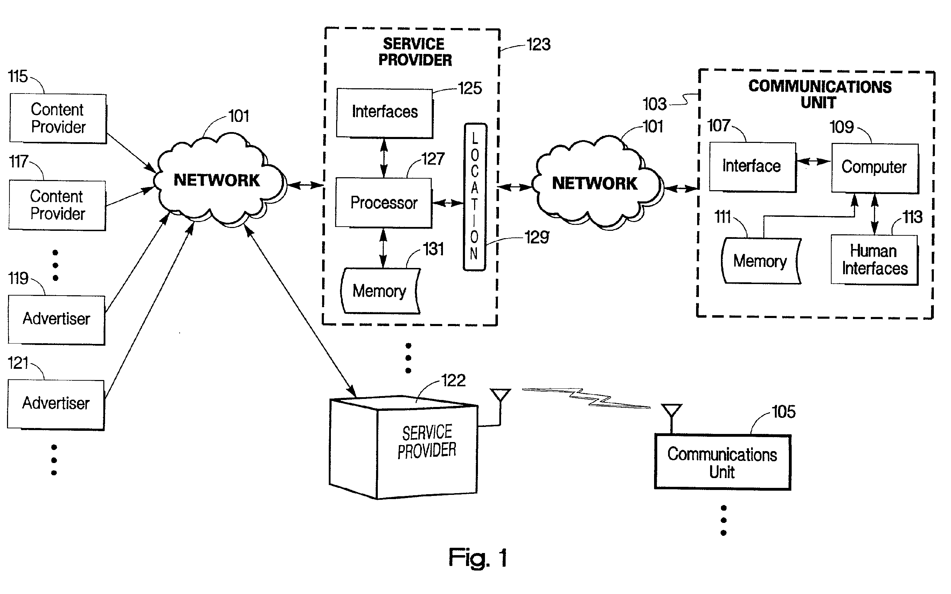

A block diagram of a communications arrangement that provides content and information delivery via a wide area network is shown in FIG. 1. The wide area network 101 in a preferred embodiment is the arrangement commonly known as the Internet world wide web but could be other implementations that provide two-way connectivity between communicating entities. Many users, for example users 103 and 105, are coupled to the network 101 by communication links such as wire, optical fiber, electromagnetic propagation and the like. The usual user employs an interconnect device 107, such as a wireline modem or a radio transceiver and wireless modem, to interface between a computer 109 or a similar computing device and the communications link to the network 101. A memory 111, coupled to the computer 109, stores the operating system and applications programs for the computer as well as information and data and the like which are presented to the computer. Interface from a human to the computer 101 is achieved by human interfaces 113, which are typically familiar items such as a keyboard, a visual display, a mouse, a printer, and similar devices depending upon the type of communications unit being used.

While the users can be considered consumers of information available from the network, other entities are providers of information. One entity set encompasses content providers 115, 117 who provide information, images, and similar material for consumption by users. Another entity set encompasses advertisers 119, 121 who provide advertisements for products and services that may be of interest to users. Users are accustomed to interconnect one-to-one (not shown) with a content provider via a Service Provider and the network to obtain content. Likewise, users are accustomed to interconnect one-to-one (not shown) with an advertiser (or more correctly with a supplier of goods/services, a protoadvertiser) via a service provider and the network to obtain information about a product or service that the advertiser has. One such service provider 122 is illustrated as offering service to a communications unit 105 via an electromagnetic communications link.

Often, the consumption of content is made without an overt payment for the content. In this instance, advertisements are posted along with the desired content and are used to subsidize the cost of providing "free" content. One only has to think of web searching services to appreciate the delivery of informational content that is subsidized with advertising revenue from banner ads and other forms of advertising.

Other subscription based services, such as that available at www.instant-delivery.com, maintain a no fee or low fee service by using advertising subsidies for placed advertising. A subscription based service provider 123 offers a service of gathering content from one or many content providers for the user based upon a prearranged definition of user preferences and deliver the content to the user.

The apparatus used by a service provider, in a preferred embodiment, can most simply be described as a server. As such, the service provider server includes interfaces 125 that interconnect with the network 101 or provides a radio transceiver base station and wireless modem, a processor 127, location processes 129, and memory 131 that retains operating and applications programs as well as stored advertisements and advertisement attributes, user profiles, and other materials relevant to the content providers and advertisers. In order to reduce the complexity of the communications unit, conversion of the communications unit's reported position (which in a preferred embodiment is stated in geographic coordinates, but can also be a triangulated or range data reporting of electromagnetic transmission sites, or other reported position data) to postal (ZIP) code areas in performed in location processes 129 using conventional transformation algorithms by the service provider's server.

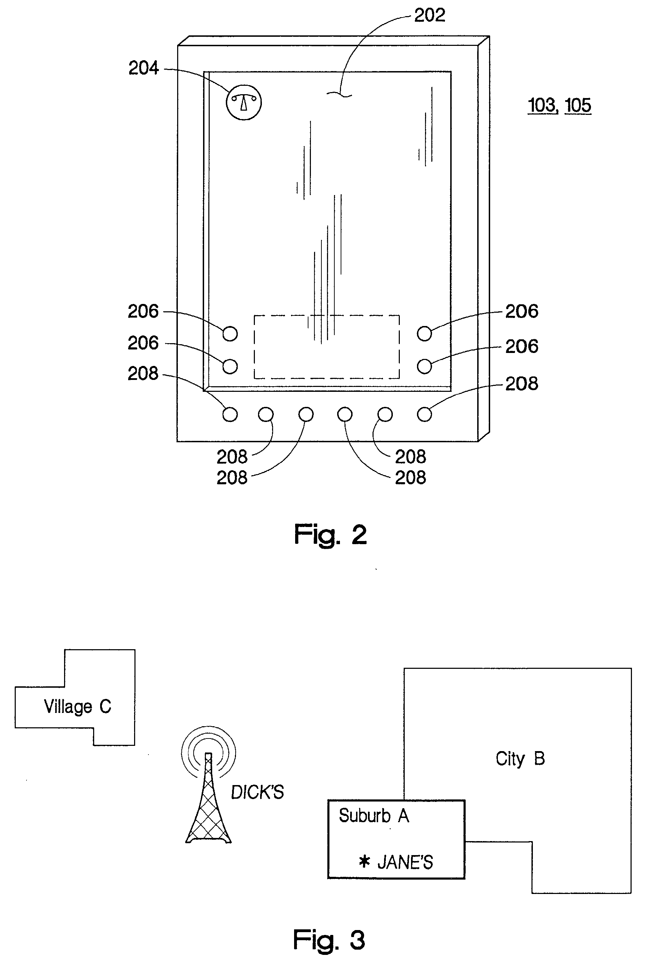

In a preferred embodiment, a communications unit 103, 105 is a moveable, portable device that has become known as a personal digital assistant (PDA). A simplified representation of such a PDA is shown in the illustration of FIG. 2. These battery-powered devices typically include a touch sensitive, liquid crystal display screen 202 that usually serves as both an output display device (on which information is displayed for the PDA user) and an input device into which instructions or information from the user are input, read, or accepted by the PDA for processing or storage via icons 204 or soft keys 206 on the touch sensitive screen 202. Hard mechanical keys 208 also provide for user input and control. Alternatively, a communications unit can be a laptop computer or a desktop computer or even an Internet appliance with a limited range of auxiliary computing ability. Of course, the most useful application of the present invention is for moveable communications units. PDAs may conventionally be equipped with a radio transceiver that enables two-way digital communications with a base station interconnection to a service provider. Laptop computers may be similarly equipped. PDAs and personal computers may alternatively or additionally have the capability of synchronizing with a service provider by a fixed plant service such as a wireline connection sites remote from the user's home. In any event, a communications unit offers a human interface, expected to be a visual display device - a video monitor, a liquid crystal display, or the like - although other non-visual, human-perceptible interfaces can also be employed. Considering a visual display further, content is received from a server and conventionally presented on the display - as a full-screen web page or a truncated (perhaps scrolling) display for a PDA. Included within the screen presentation is usually some form of advertisement. This advertisement can be inserted in the screen format (or in an audible output in the case of audio advertisements) by the content provider itself or it can be inserted by the service provider, which obtains advertisements from advertisers usually unrelated to the content provider. For a fee charged the advertiser, the service provider inserts the advertisement into the screen display containing the desired content.

In an embodiment where content is delivered to a user from a service provider that interactively delivers content to a user for display or human perceptible appreciation, i.e., a publication, electronic copies or versions of advertisements to be placed in the publication are provided or made available to the service provider for placement in the publication. Advertisements are placed in a pool (typically the buffer storage device, memory 131) for later retrieval. Any advertisement in an advertisement pool is a candidate for publication, albeit subject to the selection thereof by the service provider of the publication. (Of course, such publishers might refuse to publish certain advertising considered inappropriate for the publication or its users for a variety of reasons and might therefore refuse to publish submitted advertising material). At least one factor for determining which advertisements to place in a publication is the compensation or price, which an advertiser is willing, or might be willing, to pay for placement. The price that an advertiser is willing to pay to place an advertisement might be affected by a number of factors (e.g. an advertisement's location in the publication or the published size) or determined in a number of ways, all terms and conditions of which are considered to be offers to the service provider of the publication to place an advertisement. Advertisers can send the offered price, i.e. the offer, with, and as part of, the actual advertisements submitted to the service provider for publication. The price or other terms might be submitted either before, contemporaneously with, or after the advertisements.

Most likely, the highest-paying advertisements are placed in the publication, if they will "fit" (as determined by the service provider according to either the size of a data file that constitutes the advertisement, which will affect publication's transmission time, or, the physical size of an advertisement as it will appear in the publication) in the descending order corresponding to the offer prices to place the advertisements.

In an embodiment in which the service provider offers a subscription service, such as that available at www.instant-delivery.com, the service provider can provide some assurance to prospective advertisers that their advertisements will be delivered to preferred recipients by matching certain of an advertiser's advertisement attributes, stored by the service provider, to particular subscribers' stored preferences or by using subscriber demographic data, which can also be provided to the prospective advertisers by the publisher. By doing so, increased advertising rates over other media can be justified. Proper sharing subscriber data with prospective advertisers can also be used to demonstrate circulation or pre-identify subscribers to whom content and advertising should be delivered. Providing some assurance that the ads will be targeted to particular subscribers can be used to justify increased advertising rates. Further description of an implementation of an electronic advertising methodology can be found in US Patent Application No. 09/738,199 "Method and Apparatus to Maximize Advertising Revenue", filed on behalf of Castle et al. on 12/15/2000.

One of the attributes that can be assigned to an advertisement is that of geographic location. The significance of the geographic location can be the physical presence of an advertiser's place of business or a general geographic area in which the advertiser believes the target advertisement recipient should be located for optimum value of the advertisement.

For example, let us consider one advertiser, 119, to be Jane's Pancake House and another advertiser, 121, to be Dick's Television Broadcasting Company. In coordination with the service provider 123, Jane's identifies the following attributes for her pancake house: 1) restaurant and 2) local address and ZIP code(s) (i.e., local market). Likewise Dick's identifies the attributes: 1) entertainment, 2) television, and 3) regional market. As depicted in the map representation of FIG. 3, Jane's Pancake House is located in suburb A while Dick's Television Broadcasting Company provides a television signal that covers suburb A, city B, and village C. Jane believes that the most effective use of her Internet advertising budget is to target moveable communication units that are located essentially within the three ZIP codes that designate the postal zones in suburb A. On holidays like Mother's Day, however, Jane has discovered that many people in City B are looking for a good restaurant, so Jane expands her advertising geographic reach to the thirteen ZIP codes covering City B during the time preceding the holiday. Jane does not advertise in Village C. Of course, the service provider will charge an advertising premium for this service - not only does Jane's get a geographic focus for her advertising, but Jane's gets her message delivered during the time she believes most important to those wanting to know where Mother's Day breakfast is being served. Dick's Television Broadcasting Company wants to advertise to those users on the move throughout the geographic area include Suburb A, City B, and Village C and includes those ZIP codes for those areas in the advertising attributes stored by the service provider.

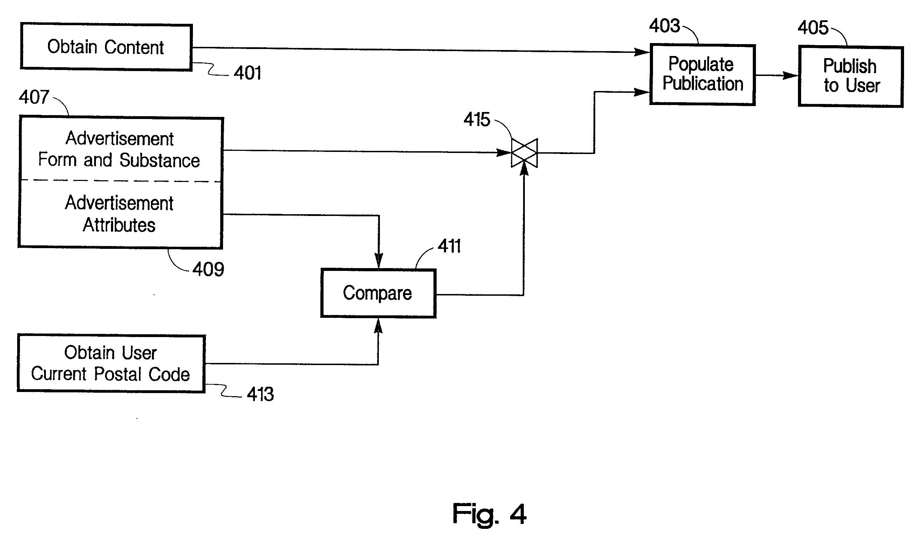

It is a feature of the present invention that the advertising added to the delivered publication be selected for, *inter alia*, a location attribute of the advertising. A simplified block diagram of advertisement and content publication is shown in FIG. 4. Content having a user-preferred subject matter requested by the user is obtained, at 401. A preferred embodiment utilizes the selection of content subject matter as a stimulus to obtain the content but alternative embodiments may have the content selected before or subsequent to a content-subsidizing advertisement determination for population of the publication 403 and delivery interface, publish to the user 405. Each advertisement, for example advertisement 407, has the basic form and substance of the advertisement resident at the advertiser's website in the preferred embodiment, so that the advertiser can change the advertising content at its convenience (although the form and substance may alternatively or additionally be stored at the service provider). Advertisement attributes 409, however, are stored in memory 131 at the service provider as well as an identifying URL for the advertiser's website. When there is a match, at compare function 411, of the advertisement location attribute (one or a plurality of geographically related postal codes such as ZIP codes in a preferred embodiment) associated with the advertisement and a geographic physical location of the user and detected as a user current postal (ZIP) code is obtained, at 413. As mentioned previously, the communications unit provides location coordinates (or similar data) to the service provider, which then uses a conventional algorithm to detect, or otherwise convert, the location coordinates to a ZIP code area. The form and substance of the advertisement is enabled, at logical gate 415, for placement in the delivery publication delivered to the user. Thus the publication is populated, at 403, with the content obtained, at 401, and the advertisement form and substance 407 when the advertisement ZIP code attribute matches the user location ZIP code.

In an alternative embodiment, an advertiser's advertisement attributes include a requirement to target either those roaming users (users who are not in their home ZIP code, or in nearby ZIP codes, or other expressions of home location representation), or to target those home users, users who are in their home ZIP code (or nearby). Thus, once it is ascertained that the communications unit is currently located in a ZIP code matching those in the advertisement attributes, at 411, the home ZIP code is recalled from a user profile, at 503, and further compared, at 505, to the advertisement attributes 409. The location attribute in this instance may be logically inverted for that (or those) ZIP code(s) that is are to be excluded from a comparison match. That is, a home location representation ZIP code (and adjoining ZIP codes) can be a non-match and all other roam ZIP codes (subject to an optional validity check, not shown) a match, thereby producing an enabling signal from the compare 505 to the advertisement form and substance enabling gate 415 when the home ZIP code and the advertisement location attribute do not match. The desired obtained content 401 and the advertisement form and substance are subsequently populated into the publication, at 403, and published to the user, at 405.

Jane's Pancake House can then produce a different advertisement with different form and substance for those users who are roaming in suburb A from city B and village C and elsewhere. Travelers can receive targeted advertisements from Jane's that the home user's communications unit would not receive.

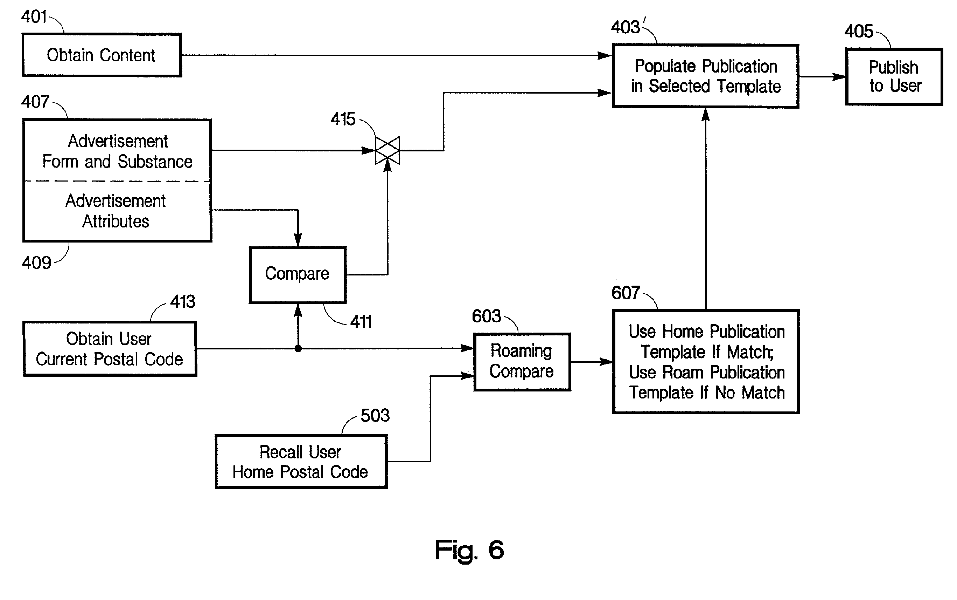

Since the user has provided a home ZIP (postal) code in some embodiments, this information can be employed in an alternative embodiment to reconfigure the publication depending upon whether the user is physically located in the home ZIP code or in an away, or roam, ZIP (postal) code. As illustrated in the simplified logic flow diagram of FIG. 6, once the user's communications unit current ZIP code is obtained, at 413, it can be compared, at 603, to the recalled (at 503) user's home ZIP code that is stored in the user's profile at the service provider. If the result of the comparison, at 603, is a match between the communications unit current ZIP code location and the user's home ZIP code, the usual template for publications delivered in the user's home ZIP code is used, at 607, for the population of the current publication, at 403'. If the result of the comparison, at 603, is a non-match (the communications unit is not in the user's home ZIP code, but is in a roam ZIP code), a different roam publication template is used, at 607, to direct the population of the current publication, at 403'. Once the current publication is populated in the selected template, it is published, at 405, to the user.

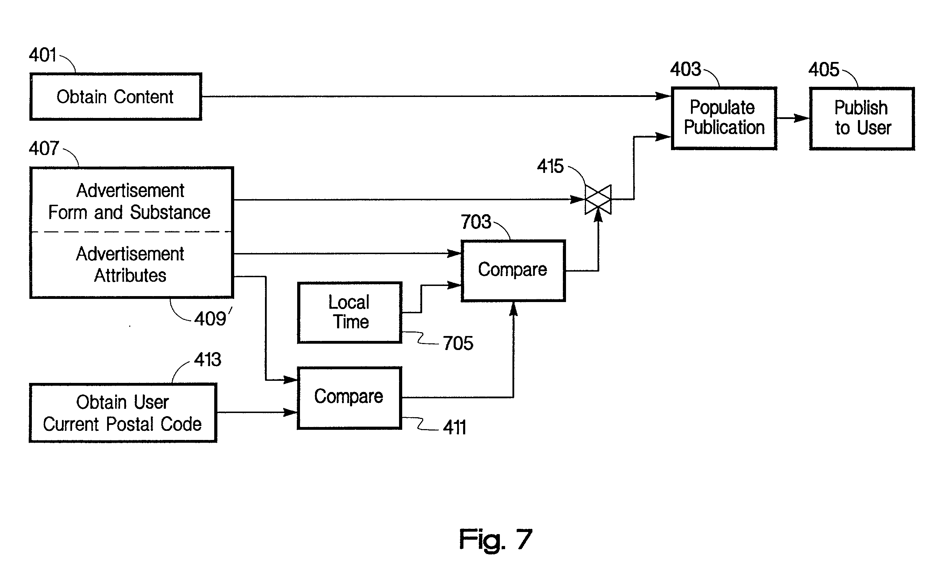

In another alternative embodiment, a time significance of the advertisement becomes a factor in the decision to populate the publication with the advertisement. Jane's Pancake House wants a wider ZIP code area of advertisement placement from the hours of 12:00 noon on Friday through 12:00 noon on Mother's Day Sunday. Dick's Television Broadcasting Service is transmitting a special regarding Village C's Saturday farmer's market at 10:00 am and desires (and pays for) a high priority of advertisements placed to communications units within the Village C ZIP codes. The additional selection technique is shown in the simplified block diagram of FIG. 7.

Once the comparison of the advertisement location attribute matches the detected user location ZIP code in the compare of 411, a further comparison is made for time significance, at compare 703. A clock maintains the time for the service provider and is one input, as local time 705, to the compare 703 for comparison to another advertising attribute - a significance of time attribute. Thus, a positive result, the match when current local time falls within the stored window of time significance associated with an advertisement, enables, at 415, the population of the advertisement form and substance in the publication, at 403.

In certain alternatives of a preferred embodiment previously described, users sign-up or register with the service provider for the information delivery service. A user, in a fashion well known to those who browse the Internet, accesses the web page of the service provider. Located thereon is a link to the instruction set, the software, that mediates operative interaction between the soon-to-become subscriber and the service provider. Clicking on or otherwise accessing the link results in the download of the software to the memory 111 of the subscriber's communications unit. The nature of the downloaded software is such that the subscriber must perform an operation commonly known as an install to place the software in a condition for use by the subscriber's communications unit. As part of the install process or upon first initiating the installed delivery program, the subscriber is asked to define individual profiles to describe the type of content the subscriber wants to have delivered and the format in which the content is to be placed for delivery to the human interfaces 113 of the communications unit. The subscriber is requested to provide other information such as name, physical address and ZIP code, e-mail address, interests and hobbies, and other similar characterizing information. Further, for the preferred embodiment, the subscriber is requested to establish delivery characteristics including a schedule of delivery times and days for the formatted content and a preferred template for the content and advertising. A subscriber advertising profile (a collection of one or more preferences of the subscriber) is generated for each subscriber and saved in the memory 131 of the service provider. Once the subscriber content and advertising profile are stored, the actual delivery service can begin. A preferred embodiment of the present invention is utilized in a content delivery service similar to that used in the Instant Delivery service available at www.instant-delivery.com, although content delivery service providers with different operating characteristics can also advantageously employ the present invention. In order to prepare delivery to a subscriber, a determination of the time the delivery is to occur is extracted from the subscriber's profile or, by a request from the subscriber.

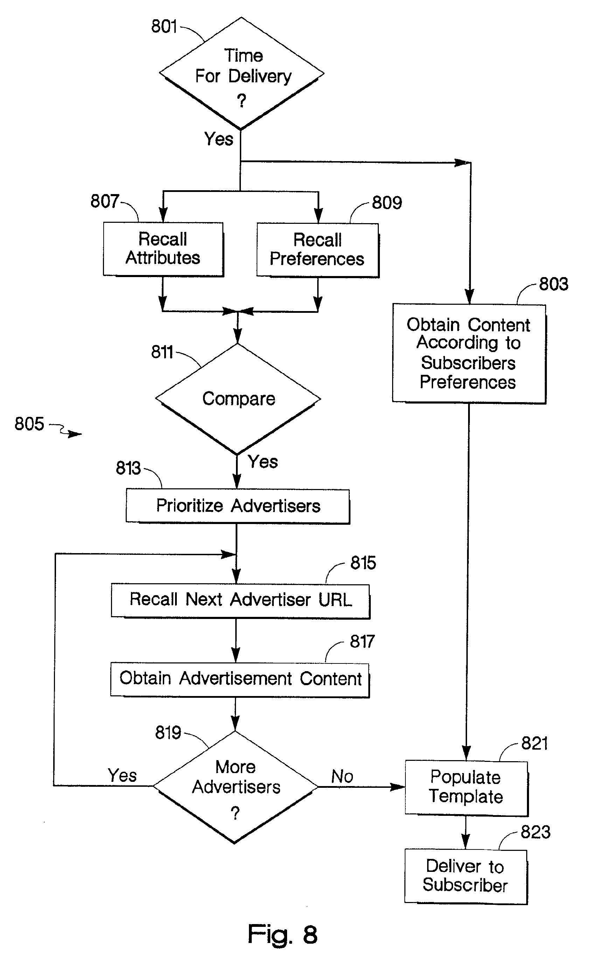

A preferred embodiment employs the process of obtaining the desired content with geographically significant advertising is depicted in the flowchart of FIG. 8. When it is determined, at 801, that a delivery of a publication is to be made to a subscriber, both the process of obtaining content according to the content preferences of the subscriber, at 803, and the process of obtaining advertisements that correspond to the subscriber profile, at 805 are activated at the service provider. In a preferred embodiment, priority of process is given to local, then regional, then national, then international advertisers. This priority, however, is subject to change by the service provider, and can include priorities established by premium pricing to the advertisers and advertiser competitive advertisement positioning. To obtain appropriate advertisements, both the stored attributes of the advertisers and the stored profiles of the subscriber are recalled by the service provider, at 807 and 809. The subscriber profiles are then compared, at 811, to the advertising attributes to detect matches between them. The vocabulary used in expressing preferences and attributes is limited so that matching need not be an extensive process. Thus, a subscriber having a current location code matching the advertisement location attribute location code and advertising preferences of "restaurant" and "television" will get matches for Jane's Pancake House and Dick's Television Broadcasting Company. A prioritization of advertisers is then made, at 813, in accordance with the service provider's policy. The Uniform Resource Locator (URL) of the first advertiser on the priority list is recalled from storage, at 815, and the URL is used to access the website of the advertiser to obtain advertising content, at 817. The obtaining of advertising content continues, at 819, until the priority list is exhausted. Once all of the content and advertising content has been obtained, the subscriber predetermined publication template is populated with the information, at 821, and delivered to the subscriber, at 823.

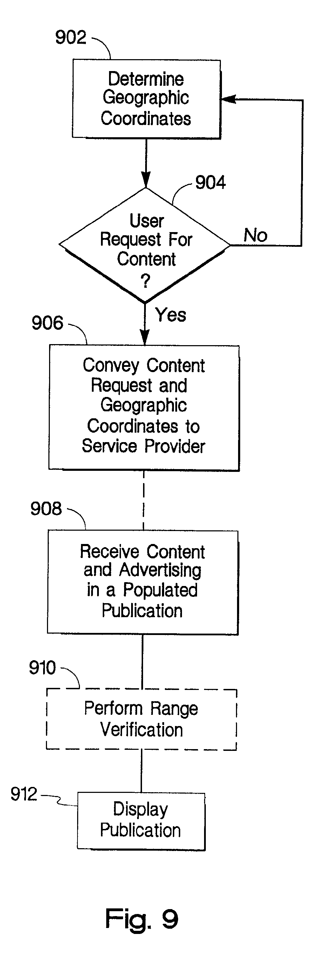

In a preferred embodiment, the user communications unit derives its location information from an integral global positioning receiver that receives signals from GPS satellites and conventionally calculates the position coordinates for the communications unit, as identified at 902 in FIG. 9. Other location techniques may alternatively be employed, for example, the use of cellular radiotelephone base site location information. When the user requests content, at 904, or when the communications unit in accordance with its programmed instructions requests content, the communications unit conveys the content request and the geographic coordinates to the service provider, at 906, preferably by way of an electromagnetic radiation transmission. Conversion of the geographic coordinates to a ZIP code area is performed by the service provider. The service provider obtains the content, sorts one or more subsidizing advertisements by location attribute, populates a publication, and transmits (publishes) the publication to the communications unit, as described previously. The communications unit receives the publication, at 908, populated by the desired content and the advertisement form and substance and selected by location attribute. In an alternative embodiment of the present invention, the communications unit performs a range verification, at 910, before displaying the publication, at 912.

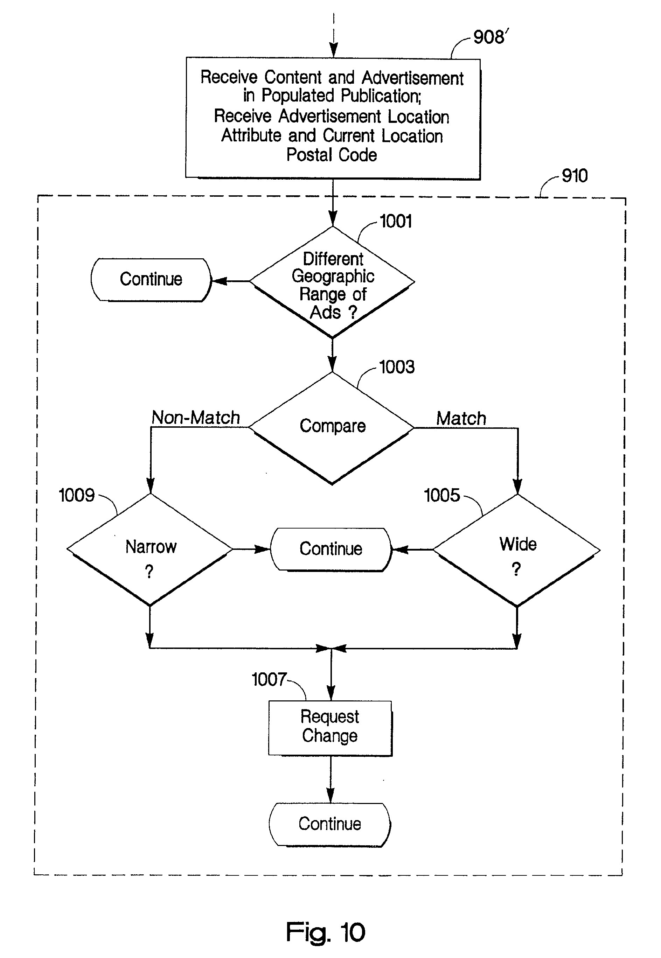

The range verification step, at 910, is further described in the flowchart of FIG. 10. Users, typically, would want their content delivered without advertisement. Most service providers are for-profit entities that must be compensated for their service, typically a subsidizing advertising policy that compensates them for the free or low-cost content publications they provide. The users are, in some configurations, given some control over the advertisements they receive by providing certain limitations in their initial profile configuration. In an alternative embodiment, a user can expand or contract the geographic boundaries of the area over which advertisements are of interest. The area is not to be contracted, however, to the extent that no advertisement location attribute meets the match for publication.

In addition to receiving the content and advertising, the communications unit also receives the advertisement location attribute and the current location postal code, at 908' in FIG. 10. The process of performing range verification 910 includes a determination, at 1001, whether a different geographic range of advertisements has been requested by the user. (A user in Village C of the above example may be interested in the wider variations in advertisements that would be delivered to suburb A and city B, and would receive Jane's Pancake House advertisement). If the user does not want a wider or narrower geographic range of advertisements, the publication is displayed. If the user has requested a change, a comparison of the ZIP code location attribute of the received advertisement to the received current location ZIP code is made, at 1003. If the current location ZIP code is the same as at least one of the received advertisement location attribute ZIP codes ("match"), a determination is made, at 1005, whether the user wants a wider geographic range of advertisements. If no change has been requested, the publication is displayed, at 912. If a change to a wider range is needed, the wider range request is sent to the service provider, at 1007, before the current publication is displayed, at 912. If a "non-match" occurs from the comparison, at 1003, (meaning the user is receiving advertisements with location attributes outside the current user location ZIP code) a determination is made, at 1009, whether the user desires a narrower geographic range for the advertisements published. If no, the current publication is displayed, at 912. If yes, a request is sent, at 1007, to the service provider to populate new publications with a narrower geographic range of advertisement attributes. The current publication is then displayed, at 912.

Thus, subsidizing advertising for desired content is tailored for the user depending upon the user's geographic location. Advertisers can more carefully target those who receive their advertisements to individuals who have a stronger interest in the advertisements. Users are exposed to advertisements that have a better chance of being of interest.

## Claims

1. A content delivery server that delivers user selected content and content-subsidizing advertisements from a wide area network (101) to a communications unit (103), comprising:
a user-determined selection of content;
an advertisement location attribute (409) associated with a content-subsidizing advertisement (407);
a communications unit location detector that obtains a current geographic location (413) of the communications unit;
a location comparator (411) that compares said advertisement location attribute to said current location of the communications unit; and
a delivery interface (125, 403, 405) that publishes said selection of content and said content-subsidizing advertisement when a location match is detected by said location comparator.

2. A content delivery server in accordance with claim 1 further comprising:
an advertisement time significance attribute (409');
a second comparator (703) that compares said advertisement time significance attribute to a local time; and
wherein said delivery interface further comprises a delivery interface that publishes said selection of content and said content-subsidizing advertisement when both a location match is detected by said location comparator and a match of local time and said advertisement time significance attribute is detected by said second comparator.

3. A content delivery server in accordance with claim 1 further comprising:
a user home location representation (503);
a home location comparator (505) that compares said home location representation to a second advertisement location attribute and provides an enabling signal when said home location representation and said second advertisement location attribute do not match; and
wherein said delivery interface further comprises a delivery interface that publishes said selection of content and said content-subsidizing advertisement when both a location match is detected by said location comparator and said enabling signal is provided.

4. A content delivery server in accordance with claim 3 further comprising:
a publication template memory (131, 607) that stores at least a home template and a roam template, which place said user selection of content and said content-subsidizing advertisement into predetermined formats for publication to the communications unit; and
a roaming comparator (603) that compares said current location to said user home location representation and directs the use of said home template upon a mismatch.

5. A content delivery server in accordance with claim 1 wherein said communications unit comprises:
a geographic locator that determines (902) said current geographic location of said communications unit;
a communications interface (107) that, upon receipt of a stimulus signal, conveys (906), inter alia, said current geographic location to said communications unit location detector; and
a display (113), coupled to said communications interface, that presents (912) said selection of content and said content-subsidizing advertisement.

6. A content delivery server in accordance with claim 5 further comprising a range verifier comparator that compares a representation of said current geographic location of the communications unit and said dvertisement location attribute.

7. A method of delivering user selected content and content-subsidizing advertisements to a communications unit comprising the steps of:
storing a user-determined selection of content;
storing an advertisement location attribute (409) associated with a content-subsidizing advertisement (407);
detecting a current geographic location (413) of the communications unit;
comparing (411) said advertisement location attribute to said detected current geographic location of the communications unit; and
publishing (403, 405) said stored user-determined selection of content and said content-subsidizing advertisement when a location match results from said comparing step.

8. A method in accordance with the method of claim 7 further comprising the steps of:
storing an advertisement time significance attribute (409');
determining local time (705);
comparing said advertisement time significance attribute and said determined local time; an
wherein said step of publishing said user-determined selection of content and said content-subsidizing advertisement further comprises the step of publishing said selection of at least one category of content and a content-subsidizing advertisement in response to both a location match in said comparing step and a match of local time and said advertisement time significance attribute.

9. A method in accordance with the method of claim 7 further comprising the steps of:
storing at least a home template and a roam template (607) which place user selected content and content-subsidizing advertisements into predetermined formats for delivery to the communications unit;
recalling a user home location representation (503);
comparing (603) said detected current geographic location of the communications unit to said recalled user home location representation; and
directing the use of said home template upon a match and the use of said roam template upon a mismatch.

10. A method in accordance with the method of claim 7 further comprising the steps of:
determining at the communications unit the current geographic location of the communications unit; and
coupling, upon receipt of a stimulus signal, said current geographic location to a content delivery service provider.

11. A method in accordance with the method of claim 7 further comprising the steps of:
recalling a user home location representation (503);
comparing (505) said home location representation to a second advertisement location attribute;
providing an enabling signal when said home location representation and said second advertisement location attribute do not match; and
wherein said publishing step further comprises the step of publishing said stored user-determined selection of content and said content-subsidizing advertisement in response to both a location match in said comparing said advertisement location attribute to said detected current geographic location of the communications unit step and said provision of said enabling signal.
